# FASCICULE DE BREVET EUROPEEN

(11) **EP 1 624 761 B1**
(45) Date de publication et mention de la délivrance du brevet: **13.12.2006**
(21) Numéro de dépôt: 04742686.1
(22) Date de dépôt: 07.05.2004
(51) Int. Cl.: A23C 9/123, A23C 9/13

(54) **PROCEDE ET INOCULUM POUR FERMENTATION LACTIQUE ACIDIFIANTE**
VERFAHREN UND INOCULUM ZUR ANSÄUERNDEN MILCHSÄUREGÄRUNG
METHOD AND INOCULUM FOR ACIDIFYING LACTIC FERMENTATION

(30) Priorité: 19.05.2003 FR 0305956
(43) Date de publication de la demande: 15.02.2006
(73) Titulaire: COMPAGNIE GERVAIS DANONE, 75009 Paris (FR)
(72) Inventeur: MARCHAL, Laurent, F-91360 Villemoisson sur Orge (FR)
(74) Mandataire: Perin, Georges
(86) Numéro de dépôt international: PCT/FR2004/001129
(87) Numéro de publication internationale: WO 2004/103082

(56) Documents cités:
- EP-A- 0 154 614
- EP-A- 0 281 467
- EP-A- 0 486 738
- GB-A- 1 085 699
- CHUMCHUERE S ET AL: "Selection of starter cultures for the fermentation of soya milk" FOOD MICROBIOLOGY (LONDON), vol. 16, no. 2, avril 1999 (1999-04), pages 129-137, XP002260488 ISSN: 0740-0020
- HEENAN C N ET AL: "GROWTH MEDIUM FOR CULTURING PROBIOTIC BACTERIA FOR APPLICATIONS IN VEGETARIAN FOOD PRODUCTS" LEBENSMITTEL WISSENSCHAFT UND TECHNOLOGIE, ACADEMIC PRESS, LONDON, GB, vol. 35, no. 2, 2002, pages 171-176, XP008012512 ISSN: 0023-6438
- AMRANE A: "EFFECT OF INORGANIC PHOSPHATE ON LACTATE PRODUCTION BY LACTOBACILLUS HELVETICUS GROWN ON SUPPLEMENTED WHEY PERMEATE" JOURNAL OF CHEMICAL TECHNOLOGY AND BIOTECHNOLOGY. (INTERNATIONAL JOURNAL OF BIOTECHNICAL AND CHEMICAL PROCESSES), ELSEVIER APPLIED SCIENCE PUBLISHERS. BARKING, GB, vol. 75, no. 3, 1 mars 2000 (2000-03-01), pages 223-228, XP001009060 ISSN: 0268-2575
- LOURENS-HATTINGH A ET AL: "Yogurt as probiotic carrier food" INTERNATIONAL DAIRY JOURNAL, ELSEVIER APPLIED SCIENCE, BARKING,, GB, vol. 11, no. 1-2, 2001, pages 1-17, XP002232456 ISSN: 0958-6946

## Description

La présente demande de brevet relève du domaine de l'industrie laitière. Elle est relative à un nouveau procédé de fermentation lactique acidifiante, à une nouvelle composition inoculum de ferments lactiques, à des moyens pour sa préparation, et à ses applications pour la production de produits laitiers fermentés.

Dans le domaine des produits laitiers, les goûts du consommateur sont actuellement généralement orientés vers des textures crémeuses et des saveurs douces. Ceci amène les industriels laitiers à privilégier tout moyen et toute condition opératoire qui permettent d'obtenir une acidification douce du substrat laitier lors de la fermentation lactique, de manière à obtenir un produit laitier fermenté qui présente un pH, mais aussi une texture et des qualités organoleptiques en rapport avec ces goûts.

Typiquement, lors de la fabrication de yoghourts par fermentation lactique par ensemencement direct, les industriels laitiers cherchent à obtenir un ralentissement de la cinétique d'acidification à partir d'un pH compris entre 5 et 4,5, par exemple à partir dé 4,6, de manière à obtenir un plateau d'acidification qui se stabilise sur un pH compris entre 4,5 et 4 par exemple pour un pH à 1000 minutes à 4,25 (le pH à 1000 minutes représente le pH mesuré 1000 minutes après le début de la fermentation). Ce souhait de mettre en oeuvre une cinétique d'acidification qui soit douce est par ailleurs mis en balance avec le fait qu'il est également souhaitable d'atteindre un pH de 5,5 aussi rapidement que possible, de manière à limiter les divers risques de contaminations. En effet, plus le pH de 5,5 est rapidement atteint, moins il y a de risques de développement de contaminants résistants au traitement thermique, tels que des spores, et notamment des spores de *Bacillus ;* de plus, les fermentations courtes limitent les incidents phagiques. En outre, il est bien sûr aussi utile de maintenir des temps de fermentation assez courts pour que la production industrielle soit la plus rentable possible.

Dans le cadre de la préparation de fromages blancs et petits-suisses, il importe après une phase d'acidification rapide, d'obtenir un plateau d'acidification qui se stabilise entre 4,6 et 4,3 de façon à permettre un égouttage centrifuge optimum.

Les problèmes techniques auxquels les industriels laitiers sont actuellement confrontés peuvent donc se résumer à trouver des ferments et conditions opératoires qui, lors de la fermentation lactique par ensemencement direct d'un substrat laitier, permettent d'une part de mener une acidification rapide, et d'autre part de stabiliser cette acidification à des pH élevés (typiquement pour des aliments laitiers de type yoghourts, laits fermentés, fromages blancs, et petits-suisses, il doit généralement y avoir la stabilisation entre 4,8 et 4,2).

Face à ces problèmes qui *a priori* apparaissaient conflictuels, les industriels laitiers ont opté pour une solution de compromis qui met en oeuvre des souches de ferments lactiques choisies pour leur faible vitesse de croissance et/ou métabolisme, de manière à obtenir une cinétique douce d'acidification, tout en sélectionnant parmi ces souches, celles qui restent malgré tout suffisamment rapides pour satisfaire les exigences sanitaires et économiques.

Cette sélection est d'ailleurs devenue un métier à part entière, auquel se consacre des sociétés spécialisées. Des préparations de ferments destinés à l'ensemencement direct ou semi-direct sont ainsi disponibles, prêtes à l'emploi, dans le commerce, et l'on peut, par exemple, acheter des ferments lactiques sous forme de granules (tels que des granules congelés), qui sont destinés à un ensemencement direct du substrat laitier. Ces formulations de granules évitent à l'industriel laitier l'étape délicate et longue de la préparation du ferment, tout en assurant la constance qualitative requise pour la production de produits industriels à usage alimentaire. Il faut toutefois noter que la formulation en granules des ferments ajoute encore une phase de latence au démarrage du procédé de fermentation, ce qui d'ailleurs peut être rédhibitoire pour certaines applications.

En réponse à ces besoins de moyens et/ou conditions opératoires permettant de mener une acidification rapide mais douce lors de la fermentation lactique acidifiante, la présente invention propose des moyens qui permettent de maîtriser la cinétique d'acidification lors de la fermentation lactique, et qui présentent en outre de nombreux autres avantages. Ils permettent notamment de mener une acidification qui, tout en étant plus rapide, se stabilise seule à des pH élevés appropriés à la fabrication d'aliments laitiers fermentés, tout en améliorant la texture des produits fabriqués, et sans nuire aux qualités organoleptiques.

Les nouveaux moyens selon l'invention comprennent l'utilisation de levure lysée, en apport nutritionnel à au moins un ferment lactique à activité acidifiante. Cette levure n'est donc pas capable de se multiplier significativement sur un substrat laitier, et par elle-même n'assure aucun métabolisme fermentaire sur le substrat laitier. Mais elle coopère pourtant de manière synergique au métabolisme fermentaire du(des) ferment(s) lactique(s).

Conformément à la présente invention, la levure lysée est apportée directement dans le substrat laitier qui doit être fermenté ou qui est en train de l'être, sous une forme qui favorise la disponibilité des différents éléments qui la constituent ou qu'elle contient, et de manière à ce que cette levure puisse être en présence du (des) ferment(s) lactique(s) en fonctionnement. Préférentiellement, on apporte la levure lysée avant que ne commence la fermentation lactique acidifiante, ou au démarrage de celle-ci.
Les inventeurs ont constaté que, de manière avantageuse, l'on peut efficacement choisir d'apporter le(s) ferment(s) lactique(s) et la levure lysée de manière séquentielle, ou bien de manière simultanée : il suffit que la levure lysée soit placée en présence du(des) ferment(s) lactique(s) lors de leur activité de fermentation lactique acidifiante.
En milieu industriel, il sera souvent plus simple et plus sûr d'apporter les deux types d'ingrédients de manière simultanée. Or, de manière avantageuse, les inventeurs démontrent que la levure lysée peut être apportée en mélange avec le(s) ferment(s)

Certains procédés de fermentation utilisant des cultures de départ comprenant un ferment lactique et une levure lysée sont connus dans l'art antérieur (par exemple Chumchuere et al., Food Microbiology, 1999, 16, 129-137; GB 1085699A; EP 0 154 614A). Cependant les rapports levure lysée par rapport aux ferments lactiques différent avec ceux décrits présentement. lactique(s). Cette composition inoculum qui comprend en mélange levure lysée et ferment(s) lactique(s) est destinée à être apportée après pasteurisation. Ce mode de réalisation est plus particulièrement adapté aux situations où l'on n'apporte la levure lysée qu'à de faibles doses.
Les inventeurs démontrent également que, de manière avantageuse, la levure lysée et le(s) ferment(s) lactique(s) peuvent alternativement être apportés de manière séparée dans le temps, par exemple en apportant d'abord la levure lysée, et ensuite le(s) ferment(s) lactique(s). Levure lysée et ferment(s) lactique(s) forment alors ensemble une composition sous forme de collection (composition sous forme de « kit-of parts »). Ce mode permet notamment d'apporter la levure avant pasteurisation, ce qui d'un point de vue sanitaire est préférable lorsque l'on travaille à fortes doses de levure lysée.

Le nouvel inoculum selon l'invention est donc spécialement adapté à l'ensemencement direct dans un substrat laitier et à la transformation de ce substrat laitier en aliment laitier fermenté. Il comprend soit en mélange, soit sous la forme d'une collection (« kit-of-parts ») :
- au moins un microorganisme sous une forme telle qu'il est capable d'exercer une activité de ferment sur un substrat laitier, et
- au moins une levure sous forme lysée,
ledit microorganisme à capacité de ferment contenu dans ledit inoculum, ou s'il y en a plusieurs, l'ensemble des microorganismes à capacité de ferment(s) contenus dans ledit inoculum étant choisi parmi le groupe des bactéries lactiques aptes à produire un aliment laitier fermenté par fermentation lactique acidifiante d'un substrat laitier. On donne à l'expression « capacité à exercer une activité de ferment sur un substrat » sa signification usuelle dans le domaine, c'est-à-dire une capacité à exercer sur ledit substrat une activité métabolique conduisant à la transformation d'un ou de plusieurs composé(s) de ce substrat. Ledit au moins un microorganisme à capacité de ferment présente donc une membrane cellulaire substantiellement intacte.

Selon un mode de réalisation préférentiel de l'invention, qui est plus particulièrement destiné aux faibles doses de levure lysée, le (ou l'ensemble des) microorganisme(s) à capacité de ferment(s) et la au moins une levure lysée sont présents en mélange dans ledit inoculum, avantageusement en mélange homogène tel qu'un mélange de granules de levure lysée et de granules de ferment(s) lactique(s) acidifiant(s).
Selon un autre mode de réalisation de l'invention, qui est plus particulièrement destiné aux fortes doses de levure lysée, le(s) microorganisme(s) à capacité de ferment(s) et la au moins une levure lysée sont présents dans ledit inoculum sous la forme d'une collection (« kit-of-parts »), telle qu'une collection sans mélange intime de levure lysée, par exemple sous forme de poudre ou de liquide, et de ferment(s) lactique(s).

Aux fins de la présente invention, ladite levure lysée est présente dans ledit inoculum dans des quantités définies, et dans une proportion définie par rapport au(x) ferment(s), de manière à obtenir l'effet combiné d'accélération de la cinétique d'acidification et d'obtention d'une stabilisation de l'acidification à un pH de plateau. C'est cet effet combiné d'accélération et de stabilisation qui permet de fabriquer des aliments laitiers fermentés de type yoghourts, laits fermentés, fromages et petits-suisses de manière plus rapide et donc sanitairement plus sure, tout en améliorant les qualités de texture, le tout sans nuire aux qualités gustatives de l'aliment.

Conformément à la présente invention, pour la fabrication d'aliments laitiers fermentés tels que yoghourts, laits fermentés, fromages blancs et petits-suisses, il est impératif d'apporter la levure lysée dans une proportion, par rapport au(x) ferment(s) lactique(s), qui est comprise entre 1 g de levure lysée pure pour 2.10¹³ bactéries lactiques, et 1 g dé levure lysée pure pour 2.10⁸ bactéries lactiques, préférentiellement entre 1 g de levure lysée pure pour 1.10¹² bactéries lactiques et 1 g de levure lysée pure pour 3.10⁸ bactéries lactiques.
Dans la présente demande, les masses de levure lysée sont entendues en poids sec.

Ladite levure lysée peut avoir été lysée par tout moyen de rupture membranaire approprié qui conduit à une libération des éléments constitutifs de la levure, et notamment par lyse mécanique, osmotique, chimique. Des levures lysées sont disponibles dans le commerce (par exemple, un extrait de levure « sans sel liquide » à 50% d'extrait sec est commercialisé par BioSpringer sous le code 153).

Le nouvel inoculum selon l'invention est spécialement adapté à l'ensemencement direct dans un substrat laitier et à la transformation de ce substrat laitier en yoghourt, lait fermenté, fromages blancs ou petits-suisses.

De manière surprenante, le nouvel inoculum selon l'invention donne à cette fermentation lactique sur substrat laitier une cinétique d'acidification qui est plus rapide qu'un inoculum témoin sans levure lysée, mais qui est pourtant toujours aussi douce pour ce qui concerne le pH final.

Les inventeurs ont en effet mis en évidence que l'ajout de levure lysée directement dans le substrat laitier est capable de stimuler les ferments lactiques acidifiants de telle manière que l'efficacité et la qualité de la fermentation lactique acidifiante du substrat laitier s'en trouvent améliorées, sans que ne soit pour autant dépassé un stade considéré comme optimal pour des produits laitiers fermentés destinés à la consommation humaine et notamment pour des yoghourts, laits fermentés, fromages blancs et petits-suisses. Les inventeurs ont ainsi démontré qu'il pouvait s'exercer entre levure(s) lysée(s) et ferment(s) lactique(s) acidifiant(s) une stimulation telle, que la cinétique d'acidification de la fermentation s'en trouvait accélérée, sans que ne soit pour autant perturbé le plateau final de cette cinétique d'acidification. Ce résultat est d'autant plus inattendu qu'avant la présente invention, l'homme du métier n'était pas incité à ajouter en ensemencement direct un matériau de type levure, au système réactionnel déjà complexe et délicat qui est nécessaire à la production d'aliments laitiers fermentés destinés à la consommation humaine.

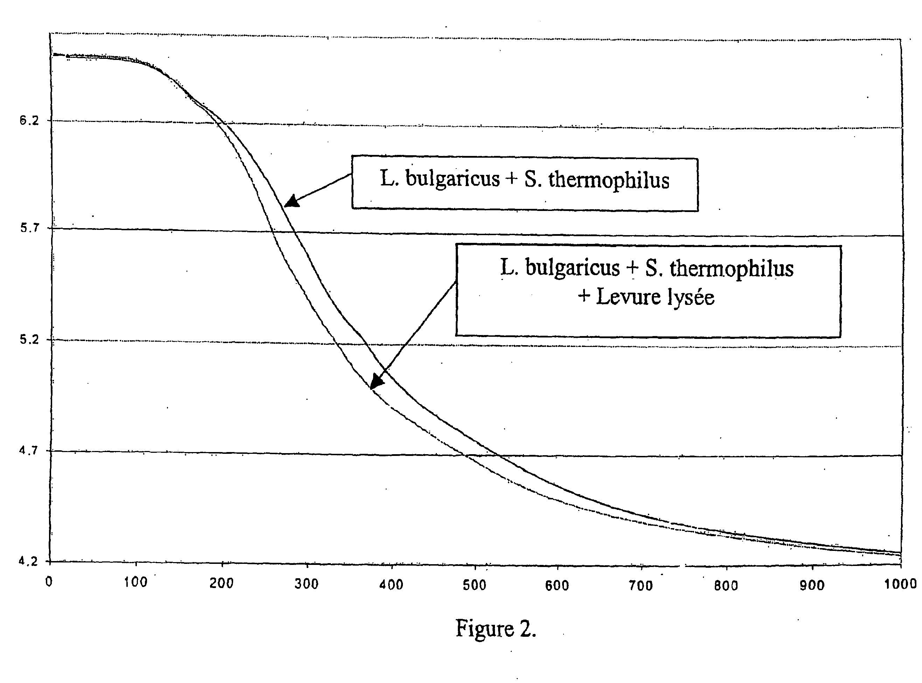

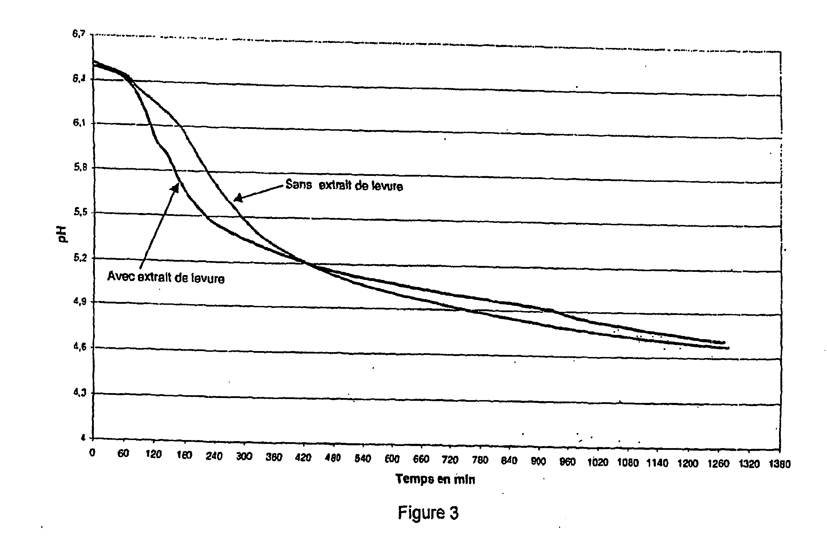

L'utilisation de levure lysée conformément à l'invention permet donc de résoudre les problèmes de l'obtention d'une cinétique d'acidification rapide mais pourtant douce, qui jusqu'alors étaient considérés comme conflictuels. Grâce à l'emploi de levure lysée conformément à l'invention, le temps nécessaire pour atteindre le pH de 5,5 puis l'acidification finale souhaitée sont nettement diminués. Des gains de une à plusieurs heures ont par exemple pu être obtenus dans des conditions opératoires de type industriel lors de la fabrication de yoghourts.
De manière remarquable, cette cinétique plus rapide présente un plateau final d'acidification non altéré par rapport à un inoculum témoin sans levure (*cf.* exemples ci-dessous, et plus particulièrement figures 2 et 3). L'utilisation de levure lysée conformément à l'invention permet donc de stimuler la cinétique d'acidification de la fermentation lactique , sans que le pH auquel démarre le plateau de fin d'acidification, et sans que le pH final de cette acidification (le pH à 1000 min peut servir de référence à cette fin) ne soient pas substantiellement différents de ce qu'ils seraient en l'absence de levure lysée. A tout le moins, le pH en fin d'acidification est d'une valeur telle que le produit de fermentation n'a pas perdu sa capacité à être utilisé en tant qu'aliment laitier fermenté. De manière remarquable, la composition, la texture et les qualités organoleptiques du produit de fermentation sont telles qu'il est toujours apte à constituer ou à servir de base à un aliment laitier fermenté de type yoghourt ou lait fermenté. Ce faisant, on a pu observer grâce à l'invention une réduction de 5 à 30 %, plus généralement de 10 à 20 %, des temps de fermentation industriels.

L'utilisation de levure lysée conformément à l'invention constitue donc bien plus que la juxtaposition de ferment(s) lactique(s) et d'un quelconque activateur de croissance : elle constitue une combinaison de moyens qui permet non seulement de stimuler la cinétique d'acidification mais surtout d'en ajuster et contrôler l'effet, ce qui est essentiel à l'obtention de produits qui puissent être considérés comme des produits laitiers fermentés destinés à la consommation humaine, et ce qui apporte une solution inattendue à des problèmes techniques qui jusqu'alors étaient considérés comme conflictuels.

Par « produits laitiers fermentés », on entend plus particulièrement des produits laitiers fermentés prêts à la consommation humaine, c'est-à-dire des aliments laitiers fermentés. Dans la présente demande, sont plus particulièrement visés les laits fermentés et yoghourts. Lesdits aliments laitiers fermentés peuvent alternativement être des fromages blancs ou des petits-suisses. ,
On donne aux termes « laits fermentés » et « yoghourts » leurs significations usuelles dans le domaine de l'industrie laitière, c'est-à-dire des produits qui sont destinés à la consommation humaine, et qui sont issus de la fermentation lactique acidifiante d'un substrat laitier. Ces produits peuvent contenir des ingrédients secondaires tels que fruits, végétaux, sucre, etc.
On peut par exemple se reporter au Décret français n°88-1203 du 30 décembre 1988 relatif aux laits fermentés et au yoghourt ou yoghourt, publié au Journal Officiel de la République Française du 31 décembre 1988.
On peut également se reporter au « Codex Alimentarius » (préparé par la Commission du Codex Alimentarius sous l'égide de la FAO et de l'OMS, et publié par la Division Information de la FAO, disponible en ligne sur http://www.codexalimentarius.net ; *cf.* plus particulièrement le volume 12 du Codex Alimentarius *« Normes Codex pour le lait et les produits laitiers* », et la norme « CODEX STAN A -11(a)-1975 »).
Le terme « lait fermenté » est ainsi réservé dans la présente demande au produit laitier préparé avec un substrat laitier qui a subi un traitement au moins équivalent à la pasteurisation, ensemencé avec des microorganismes appartenant à l'espèce ou aux espèces caractéristiques de chaque produit. Un « lait fermenté » n'a subi aucun traitement permettant de soustraire un élément constitutif du substrat laitier mis en oeuvre, et notamment n'a pas subi un égouttage du coagulum. La coagulation des « laits fermentés » ne doit pas être obtenue par d'autres moyens que ceux qui résultent de l'activité des microorganismes utilisés.
Le terme « yoghourt » est quant à lui réservé au lait fermenté obtenu, selon les usages loyaux et constants, par le développement des bactéries lactiques thermophiles spécifiques dites *Lactobacillus bulgaricus* et *Streptococcus thermophilus,* qui doivent se retrouver vivantes dans le produit fini, à raison d'au moins 10 millions de bactéries par gramme rapportées à la partie lactée.
Dans certains pays, la réglementation autorise l'ajout d'autres bactéries lactiques dans la production de yoghourt, et notamment l'utilisation additionnelle de souches de *Bifidobacterium* et/ou de *Lactobacillus acidophilus* et/ou de *Lactobacillus casei.*
Ces souches lactiques additionnelles sont destinées à conférer au produit fini diverses propriétés, telles que la propriété de favoriser l'équilibre de la flore intestinale, ou de moduler le système immunitaire.
Dans la pratique, le terme « lait fermenté » est donc généralement utilisé pour désigner les laits fermentés autres que yoghourts, et peut prendre, selon les pays, le nom de « Kefir », « Kumiss », « Lassi », « Dahi », « Leben », « Filmjölk », « Villi », « Acidophilus milk » par exemple.
La quantité d'acide lactique libre contenue dans le substrat laitier fermenté ne doit pas être inférieure à 0,6 g pour 100 g lors de la vente au consommateur, et la teneur en matière protéique apportée à la partie lactée ne doit pas être inférieure à celle d'un lait normal.
La quantité d'acide lactique libre contenue dans le yoghourt ne doit pas être inférieure à 0,7 g pour 100 g lors de la vente au consommateur.
La dénomination « fromage blanc » ou « petit-suisse » est, dans la présente demande, réservée à un fromage non affiné, non salé, qui a subi une fermentation par des bactéries lactiques uniquement (pas d'autre fermentation que la fermentation lactique).
La teneur en matière sèche des fromages blancs peut être abaissée jusqu'à 15 g ou 10 g pour 100 g de fromage blanc, selon que leur teneur en matière grasse est supérieure à 20 g, ou au plus égale à 20 g, pour 100 g de fromage blanc, après complète dessication : la teneur en matière sèche d'un fromage blanc est comprise entre 13 et 20 %. La teneur en matière sèche d'un petit-suisse quant à elle n'est pas inférieure à 23 g pour 100 g de petit-suisse. Elle est généralement comprise entre 25 et 30 %.
Le terme « lait » couvre, dans le domaine de l'industrie laitière, le lait d'origine animale sous toutes ses formes et dans toutes ses variations de compositions : lait écrémé ou non, lait concentré ou non, lait ultrafiltré ou non, lait en poudre ou non, lait ayant subi un traitement thermique ou non, lait enrichi en constituants du lait ou non, lait additionné ou non d'agents utiles à la fabrication ou à la qualité du produit fini, tels que agent de saveur, arôme, sucre, etc.

Le terme « substrat laitier » couvre aussi bien du lait, qu'une composition qui comprend du lait et à partir de laquelle un produit laitier fermenté peut être produit.
Pour la fabrication de yoghourts et laits fermentés, on utilise généralement des laits écrémés ou non, des laits concentrés ou des laits en poudre écrémés ou non, éventuellement enrichis de constituants du lait. Pour la fabrication de fromages blancs et petits-suisses, on peut également utiliser d'autres matières, toujours d'origine exclusivement laitière, telles que la crème, la matière grasse, le babeurre, utilisées seules ou en mélange.

Dans le domaine de l'industrie laitière, on entend par « ferment lactique » un microorganisme ou une souche de microorganismes, tel qu'une bactérie ou une souche de bactéries, qui est capable de mener sur un substrat laitier une fermentation par laquelle du lactose ou un autre sucre présent dans le substrat laitier est dégradé en métabolite(s), et notamment en acide lactique, conduisant ainsi à une acidification du substrat laitier jusqu'à un certain pH, de sorte qu'il se produit une gélification du substrat laitier, et qu'il en résulte un produit laitier fermenté de type yoghourt ou lait fermenté. Le pH initial du substrat laitier se situe en effet généralement entre 8 et 6, pour descendre de deux à quatre unités pH, et atteindre, en fin de fermentation lactique, un pH final qui est généralement compris entre 5 et 4 (généralement pH de 4,7-4,6 pour les yoghourts ; 4,6-4,3 pour les fromages blancs et petits-suisses). Or, à un pH compris entre 4 et 5, la micelle de caséine est déstabilisée par solubilisation du calcium phosphate, et elle précipite, causant ainsi la coagulation des protéines du lait et la formation d'un gel.

Dans la présente demande, on donne à tous les termes la portée et la signification qu'ils prennent usuellement dans le domaine de l'industrie laitière. Ainsi, lorsqu'il est fait référence à une « fermentation lactique », il s'agit donc en fait d'une fermentation lactique acidifiante, qui se traduit par une acidification suite à la production d'acide lactique pouvant s'accompagner de production d'autres acides, de CO₂ ou d'éthanol et de substances diverses telles que des exopolysaccharides ou des substances aromatiques, par exemple diacétyle et acétaldéhyde.
De même, on entend par « ferment lactique », un microorganisme ou une souche de microorganismes qui est capable de mener une telle fermentation lactique acidifiante sur un substrat laitier.

Conformément à la présente invention, on choisira de manière avantageuse comme microorganisme(s) à capacité de ferment(s) lactique(s), des bactéries lactiques utilisées dans la fabrication de yoghourts et/ou utilisées dans la fabrication de laits fermentés, et plus particulièrement des bactéries lactiques choisies parmi le groupê suivant :
- les souches de *Streptococcus thermophilus* (par exemple, la souche de *Streptococcus thermophilus* qui est disponible sous le numéro I-1630 auprès de la C.N.C.M.),
- les souches de *Lactobacillus delbrueckii ssp. bulgaricus* (par exemple, la souche de *Lactobacillus delbrueckii ssp. bulgaricus* qui est disponible auprès de la C.N.C.M sous le numéro I-1519),
- les souches de *Bifidobacterium,* telles que les *B. lactis* (par exemple, C.N.C.M. I-2494), *B. breve, B. bifidum,* les *B. longum,* les *B. infantis,*
- les souches de *Lactobacillus acidophilus* (C.N.C.M. I-0967 par exemple),
- les souches de *Lactobacillus casei* (C.N.C.M. I-518 par exemple),
- les souches de *Lactobacillus helveticus,*
- les souches de *Lactobacillus delbrueckii ssp. lactis* (C.N.C.M. I-2843 par exemple),
- les souches de *Lactococcus cremoris,*
- les souches de *Lactococcus lactis ssp. lactis* (C.N.C.M. I-1631 par exemple),
- les souches de *Lactococcus lactis ssp. lactis biovar diacetylactis* (C.N.C.M. I-2806, par exemple),
- les souches de *Pediococcus acidilactici,*
- les souches de *Leuconostoc cremoris,*
- les souches de *Leuconostoc dextranicum,*
- les souches de *Leuconostoc lactis.*
   La C.N.C.M. est la Collection Nationale de Cultures de Microorganismes (C.N.C.M.
- Institut Pasteur - 28, rue du Docteur Roux - 75724 Paris Cedex 15 - France).

De manière préférentielle, ledit au moins un microorganisme à capacité de ferment contenu dans l'inoculum selon l'invention est une bactérie de l'espèce *Streptococcus thermophilus,* ou une bactérie de l'espèce *Lactobacillus delbrueckii* ssp. *bulgaricus.*
De manière encore plus préférentielle, les deux espèces *Lactobacillus delbrueckii* ssp. *bulgaricus* et *Streptococcus thermophilus* sont représentées dans l'ensemble des microorganismes à capacité de ferments contenus dans ledit inoculum. Ces deux espèces peuvent être les seules deux espèces dudit ensemble de microorganismes à capacité de ferments. L'inoculum selon l'invention est alors spécialement adapté à la fabrication de yoghourts. Dans certains pays, elles pourront être accompagnées de bactéries des espèces *Bifidobacterium,* et/ou *Lactobacillus acidophilus,* et/ou *Lactobacillus.*

Toute levure est *α priori* adaptée à la mise en oeuvre de la présente invention. Une levure de l'espèce *Saccharomyces cerevisiae* est un exemple particulièrement approprié.

Ladite au moins une levure lysée peut être apportée au substrat laitier, et/ou être présente dans ledit inoculum, sous toute forme adaptée à sa fonction d'apport nutritionnel.
Elle peut, par exemple, être apportée sous forme liquide (par exemple, l'extrait de levure de boulanger commercialisé par Lievitech sous le code 30701 - « Special Light Type " F"»: « Baker's Yeast extract ; Super Protex, without salt, Liquid »), ou bien sous forme de poudre (par exemple, l'extrait de levure (autolysat pur) sans sel, type D commercialisé par Bio Springer sous les codes 107 - poudre traditionnelle - ou 180 - poudre microgranulée - ou bien extrait de levure sans sel liquide 153 de SPRINGER BIOTECH). Lorsqu'elle est sous forme liquide, ladite levure lysée peut être apportée par injection sur la ligne de production. Lorsqu'elle est sous forme de poudre, on peut apporter ladite levure lysée au moment de l'étape de poudrage du lait (mélange - « mix » - de lait et de poudre de lait écrémé). Ce mode d'apport de levure sous forme de poudre ou de liquide est particulièrement bien adapté à un apport de levure lysée avant pasteurisation, car il permet aisément un apport de levure lysée à fortes doses.

Selon un autre mode de réalisation de l'invention, la levure lysée est apportée au substrat laitier à fermenter ou en fermentation sous forme de granules, et de manière avantageuse sous forme de granules congelés (*cf.* exemple 1 ci-dessous). La forme « granule » facilite la manipulation de levure lysée en milieu industriel, et la conservation des stocks de levure. En outre, la forme « granule congelé » rend la dissolution et l'homogénéisation dans le substrat laitier plus simple et plus rapide. La forme « granule » est particulièrement bien adaptée lorsque la levure lysée est destinée à être apportée au substrat laitier après pasteurisation, car il s'agit généralement d'un apport de levure lysée à faible dose.

Avant pasteurisation, on pourra travailler à de fortes doses de levure lysée, et notamment à des doses de levure lysée allant de 1 gramme de levure lysée pure pour 4.10¹¹ bactéries lactiques à 1 gramme de levure lysée pure pour 2.10⁸ bactéries lactiques, préférentiellement entre 1 gramme de levure lysée pure pour 4.10¹¹ bactéries lactiques, et 1 gramme de levure lysée pure pour 3.10⁸ bactéries lactiques. A ces doses, on trouvera généralement qu'il est plus aisé d'apporter la levure lysée sous forme poudre ou liquide.
Le(s) ferment(s) lactique(s) est(sont) quant à lui(eux) bien entendu toujours apporté(s) après pasteurisation.

Après pasteurisation, on travaillera de manière avantageuse à une dose de levure lysée allant de 1 gramme de levure lysée pure pour 2.10¹³ bactéries lactiques à 1 gramme de levure lysée pure pour 1.10⁹ bactéries lactiques, préférentiellement à une dose de levure lysée allant de 1 gramme de levure lysée pure pour 8.10¹¹ bactéries lactiques à 1 gramme de levure lysée pure pour 3.10¹⁰ bactéries lactiques, plus préférentiellement à une dose de levure lysée allant de 1 gramme de levure lysée pure pour 2.10¹¹ bactéries lactiques à 1 gramme de levure lysée pure pour 3.10¹⁰ bactéries lactiques. On pourra alors de manière avantageuse utiliser un inoculum dans lequel ferment(s) lactique(s) et levure lysée sont en mélange auxdites proportions au sein d'une même composition de sorte qu'ils puissent être apportés ensemble en une seule opération dans le substrat laitier. On pourra notamment efficacement utiliser un mélange de granules de levure lysée et de granules de ferment(s) lactique(s).

Ledit au moins un microorganisme à capacité de ferment peut être apporté, et/ou présent dans ledit inoculum, sous toute forme appropriée à sa fonction de ferment.
De préférence, lorsque ladite levure lysée est apportée sous forme de granules tels que des granules congelés, le(s) ferment(s) lactique(s) sont eux aussi apportés sous forme de granules, tels que des granules congelés. L'ensemble de l'inoculum comprendra alors à la fois des granules de ferments et des granules de levure, ce qui donne une homogénéité de forme, et facilite le mélange homogène des deux types de granules. Ce mélange peut alors se faire par simple voie mécanique.
Lorsqu'elle est formulée sous forme de granules, et plus particulièrement sous forme de granules congelés, la composition inoculum selon l'invention est particulièrement bien adaptée à l'ensemencement direct du substrat laitier.
Typiquement, les granules présenteront une forme sphérique, avec un diamètre généralement compris entre 2 et 10 mm environ.
La fabrication de granules de ferments lactiques est une opération bien connue de l'homme du métier. Pour la fabrication de granules de ferments lactiques, on pourra par exemple se référer à « Bactéries lactiques : Aspect fondamentaux et technologique », Volume 1, Uriage : Lorica, 1994, voir notamment le Chapitre III-4, pages 539-553, Lejard *et al.* « Production de ferments concentrés pour ensemencement direct »), où l'on trouvera des exemples de production de ferments concentrés pour l'ensemencement direct. On trouvera dans l'exemple 2 ci-dessous un exemple de fabrication de granules de *L. bulgaricus,* et de granules de *S*. *thermophilus.*
En revanche, à la connaissance de la Demanderesse, la fabrication de granules de levures lysées est nouvelle : il n'avait pas encore été produit de granules de levures lysées, et notamment de granules congelés de levures lysées. Pour ce faire, on peut procéder comme suit : des levures lysées, par exemple sous la forme d'un extrait de levure tel qu'il est disponible dans le commerce, sont soumises à stérilisation, formées en granules (par exemple, par gouttage dans de l'azote liquide, puis congelées en conditions stériles). L'exemple 1 ci-dessous donne une illustration d'un tel protocole. Les caractéristiques physiques des granules de levures lysées (extrait sec, pression osmotique, hygroscopicité) diffèrent de manière très substantielle de celles des granules de ferments.

Conformément à la présente invention, la levure lysée n'est pas apportée en excès, mais de manière contrôlée et limitée.
Pour stimuler la cinétique d'acidification d'une fermentation lactique menée sur un substrat laitier sans perturber significativement la fin d'acidification, et ainsi obtenir un aliment laitier fermenté de type yoghourt, lait fermenté, fromage blanc ou petit-suisse, dont les qualités organoleptiques et la texture sont en accord avec les goûts des consommateurs, on limitera donc, conformément à la présente invention, l'apport de levure lysée à des doses strictement nécessaires à l'obtention d'une courbe d'acidification idéale (acidification rapide mais stabilisation haute). En tout état de cause, la dose maximale de levure lysée, quel que soit son mode d'introduction et quelles que soient les souches et les concentrations de bactéries lactiques utilisées, ne devra jamais être supérieure à 0,6g de levure pure par litre de substrat à fermenter et de préférence pas supérieure à 0,5g de levure pure par litre de substrat à fermenter.

Le ou les ferment(s) sont quant à eux apportés aux doses appropriées pour la fabrication du produit laitier fermenté concerné ; typiquement, ils sont généralement apportés à une dose comprise entre 0,01 et 0,5 g/L, préférentiellement entre 0,05 et 0,2 g/L.

Les proportions respectives de levure lysée et de ferment(s) lactique(s) dans l'inoculum selon l'invention peuvent être toutes deux ajustées de manière à obtenir la quantité souhaitée de levure lysée à apporter. On fabrique aisément des granules de levure lysée qui contiennent 10 à 80% en poids de levure, préférentiellement entre 25 à 65% en poids de levure, par exemple en fabriquant des granules congelés de levure (*cf.* exemple 1 ci-dessous). Une proportion de granules de levure lysée dans un inoculum selon l'invention qui contient les ferments lactiques aussi sous forme de granules sera alors couramment comprise entre et 5% et 60% en poids de granules de levure lysée, préférentiellement 20% et 40% en poids de granules de levure, par rapport au poids total de l'ensemble des granules (poids dés granules de ferments + poids des granules de levure lysée). Les granules de ferment(s) comprennent généralement entre 10⁹ et 10¹¹ bactéries lactiques par gramme (*cf.* exemple 2 ci-dessous).

De manière inattendue, il a également été constaté que les nouveaux moyens conformes à l'invention apportent un gain en terme de texture pour l'aliment laitier fermenté obtenu, notamment lors de la fabrication de yoghourts en présence de *L*. *bulgaricus* et *S. thermophilus.* Les inventeurs ont ainsi observé que, pendant la conservation, les yoghourts fabriqués conformément à la présente invention (c'est-à-dire par ensemencement direct d'un inoculum constitué de granules congelés de levure lysée, par exemple *S. cerevisiae* lysée, et de granules congelés des ferments *L. bulgaricus* et *S. thermophilus)* acquéraient une consistance et une viscosité augmentées par rapport à des yoghourts témoins obtenus à partir d'un inoculum équivalent mais qui ne comprend pas de levure lysée (augmentation de consistance de l'ordre de 5% à 15% mesurée par pénétrométrie avec un appareil TAXT-2, et augmentation de viscosité de l'ordre de 5% à 25% mesurée sur un Rhéomat 180). La présente invention vise donc, en tant que produits, les aliments laitiers fermentés de type yoghourts, laits fermentés, fromages blancs et petits-suisses, qui sont susceptibles d'être obtenus conformément à la présente invention. Ils présentent en effet des caractéristiques différentes, et notamment des caractéristiques de consistance et de viscosité améliorées, par rapport aux aliments témoins correspondants.
Les mécanismes à la base de la stimulation contrôlée de la cinétique d'acidification n'ont pas à ce jour été complètement élucidés par les inventeurs. Toutefois, il apparaît d'ores et déjà que ces nouveaux moyens agissent à tout le moins sur la vitesse de croissance des ferments. Ceci permet de limiter l'étape préalable usuelle de propagation des ferments lors d'un ensemencement indirect ou semi-direct, et donc un gain en terme de temps et de coût, étant donné que les milieux de culture nécessaires à cette étape sont nettement plus coûteux que les nouveaux moyens objets de la présente demande.

De manière préférentielle, la présente demande vise l'utilisation de levures lysées en apport nutritionnel à au moins un microorganisme à capacité de ferment choisi parmi les bactéries lactiques thermophiles. Plus préférentiellement, on choisira une ou des bactérie(s) lactique(s) thermophile(s) homofermentaire(s). De manière avantageuse, on choisira plus particulièrement un microorganisme à capacité de ferment choisi parmi les souches des espèces *Streptococcus thermophilus* et *Lactobacillus delbrueckii* ssp. *bulgaricus,* c'est-à-dire parmi les souches utilisables pour la production de yoghourts. La présente demande vise donc de manière particulière toute composition comprenant au moins une bactérie de l'espèce *S. thermophilus* et/ou de l'espèce *L. bulgaricus,* et au moins une levure lysée ; une telle composition est spécialement adaptée à la fabrication de yoghourts.

Plus préférentiellement, la présente demande vise l'utilisation de levure lysée en apport nutritionnel à au moins un microorganisme à capacité de ferment choisi parmi les souches de l'espèce *Streptococcus thermophilus,* et avec au moins un microorganisme à capacité de ferment choisi parmi les souches de l'espèce *Lactobacillus delbrueckii* ssp. *bulgaricus.* Il existe en effet une relation symbiotique entre *S. thermophilus* et *L. bulgaricus,* les bactéries d'une espèce stimulant la croissance de celles de l'autre espèce. *L. bulgaricus* stimule la croissance de *S. thermophilus* en libérant des acides aminés et des peptides à partir des protéines du lait, ce qui permet à *S. thermophilus* d'avoir une croissance plus rapide au démarrage de l'incubation. *S. thermophilus,* de son côté, produit de l'acide formique qui stimule la croissance de *L. bulgaricus.* Cette symbiose est connue sous le nom de « proto-coopération », et conduit à des temps de fermentation plus courts, et également à un produit qui présente des caractéristiques différentes de celles que présente un produit obtenu à l'aide d'une seule des deux espèces (arôme spécifique "yoghourt", texture améliorée).

Les inventeurs ont pour leur part constaté que l'utilisation de levure lysée en apport nutritionnel à moins une souche de chacune de ces deux espèces, conduisait à une stimulation de la synergie initiale entre les deux souches, tout en respectant les conditions de non-altération du plateau d'acidification qui sont exigées pour la production d'un aliment laitier destiné à la consommation humaine, tel qu'un yoghourt (*cf.* exemple 4 ci-dessous). La présente demande vise donc en particulier toute composition d'inoculum qui comprend au moins une levure lysée, et dont les ferments sont des espèces *S*. *thermophilus* et *L. bulgaricus.*

Selon un autre aspect de l'invention, la présente demande vise également un procédé pour la production d'un inoculum à ensemencement direct conforme à l'invention, caractérisé en ce qu'on mélange ensemble, ou en ce que l'on place ensemble en collection :
- au moins un microorganisme à capacité de ferment lactique apte à produire un aliment laitier fermenté par fermentation lactique d'un substrat laitier, tel qu'un ferment lactique apte à produire un lait fermenté, un yoghourt, un fromage blanc ou un petit suisse,
- au moins une levure lysée.

La présente demande vise également les applications de l'invention dans le domaine de la production de produits laitiers fermentés, et plus particulièrement d'aliments laitiers fermentés. La présente demande vise ainsi un nouveau procédé de fermentation lactique d'un substrat laitier. Ce nouveau procédé de fermentation est caractérisé en ce que l'on apporte à ce substrat laitier un(des) microorganisme(s) à capacité de ferment(s) lactique(s) et au moins une levure lysée, et en ce que l'on maintient ce substrat dans des conditions favorables à l'activité de fermentation du(des) microorganisme à capacité de ferment(s) lactique(s) apportés.
La présente demande vise plus particulièrement un procédé de fermentation lactique d'un substrat laitier, selon lequel ledit(lesdits) microorganisme(s) à capacité de ferment(s) lactique(s) et ladite levure lysée sont apportés audit substrat laitier sous la forme d'un inoculum conforme à la présente invention. Après pasteurisation, et éventuellement homogénéisation du substrat laitier, on apporte audit substrat ledit au moins un microorganisme à capacité de ferment, et ladite au moins une levure lysée, on place le substrat laitier en incubation de sorte à permettre la fermentation souhaitée, puis on refroidit le substrat à un pH fixé (défini par le type d'aliment que l'on produit ; pour un yoghourt par exemple, on arrête la fermentation lorsque le pH est entre 4,5 et 4).
Par nature, le substrat laitier contient une source de lactose. L'homme du métier sait adapter les conditions opératoires de fermentation, et notamment les conditions de température, d'agitation et de quantité d'oxygène présent, au(x) ferment(s) lactique(s) présent(s) dans le substrat laitier, de manière à ce que ce(s) ferment(s) lactique(s) puissent exprimer dans ce substrat leur capacité à transformer le lactose en acide lactique. Pour la fabrication de yoghourts par exemple, on opère en général à une température de 40°C. Pour la fabrication de laits fermentés, on opère en général à une température de 37°C. Pour la fabrication de fromages blancs et petits-suisses, on opère en général à une température de 17°C à 30°C.
Le procédé de fermentation lactique selon l'invention permet directement de produire des produits laitiers fermentés, et la présente demande vise donc également tout procédé de fabrication de produits laitiers fermentés, et plus particulièrement d'aliments laitiers fermentés tels que yoghourts, laits fermentés, fromage blanc et petit-suisse, par fermentation lactique acidifiante d'un substrat laitier pasteurisé,
caractérisé en ce que la fermentation lactique acidifiante mise en oeuvre pour la fabrication de ces produits est une fermentation lactique selon l'invention, c'est-à-dire que :
- l'on apporte au moins une levure lysée au substrat laitier, de sorte que, lors ladite fermentation lactique acidifiante, le(les) ferment(s) lactique(s) acidifiant(s) sont en présence de cette au moins une levure lysée,
   ladite au moins une levure lysée étant apportée en une quantité allant de 1 gramme de levure lysée pure pour 2.10¹³ bactéries lactiques, jusqu'à 1 gramme de levure lysée pure pour 2.10⁸ bactéries lactiques,
   en veillant à ce que la quantité totale de levure lysée apportée au substrat laitier ne dépasse pas les 0,6 gramme de levure lysée pure par litre de substrat à fermenter, et préférentiellement les 0,5 gramme de levure lysée pure par litre de substrat à fermenter,
   et que
- l'on maintient ce substrat laitier inoculé dans des conditions favorables à l'activité de fermentation du(des) ferment(s) lactique(s) acidifiant(s), de sorte à produire l'aliment laitier fermenté souhaité.

L'ensemble de la fabrication d'aliments laitiers fermentés de type yoghourts, laits fermentés, fromages blancs et petits-suisses comprend les étapes de pasteurisation du substrat laitier et de fermentation lactique acidifiante du substrat laitier pasteurisé. Conformément à la présente invention, la levure lysée peut être apportée avant ou après pasteurisation, aux proportions ci-dessus indiquées. Ce procédé conforme à la présente invention permet d'apporter les ferments lactiques directement sans pré-culture.

La présente demande est illustrée par les exemples qui suivent, dans lesquels il est fait référence aux figures 1, 2 et 3.
La figure 1 présente une courbe illustrant la stimulation exercée par des granules de levure lysée sur la cinétique d'acidification d'un ferment de *L. bulgaricus* sur substrat laitier.
La figure 2 présente une courbe illustrant la stimulation exercée par des granules de levure lysée sur la cinétique d'acidification de la symbiose que développent un ferment de *L. bulgaricus* et un ferment de *S. thermophilus* sur substrat laitier.
La figure 3 présente une courbe illustrant la stimulation exercée par un extrait de levure sec apporté avant pasteurisation, sur la fermentation exercée par *S.thermophilus.*

### Exemple 1 : préparation de granules congelés de levure lysée

Un extrait de levure BIOSPRINGER "sans sel liquide" à 50% d'extrait sec (code 153) est utilisé, à titre de levure lysée. Des granules de levure lysée sont préparés selon le protocole suivant :
1-Stérilisation d'un litre d'extrait de levure (EL) en autoclave (121°C 15') Dans une bouteille en verre dont le bouchon permet un prélèvement stérile du liquide après traitement thermique,
2-Refroidissement de l'EL entre 20°C et 30°C, et procéder ensuite sous une hotte à flux laminaire avec du matériel stérile,
3-Raccordement de la bouteille à une pompe péristaltique à l'aide d'un tuyau souple de petite section. dont l'autre extrémité est relié à un système permettant la connexion avec plusieurs aiguilles de seringue,
4-Disposer un bac isotherme rempli d'azote liquide sous les aiguilles,
5-Démarrer la pompe péristaltique, et régler le débit pour obtenir un gouttage régulier de l'EL dans l'azote liquide,
6-Récupérer et conditionner les granulés stérilement puis les conserver à -80°C.

### Exemple 2 : Fabrication de granules congelés de bactéries lactiques

### 1-Préparation de l'inoculum à partir de la souche I-1519 de L.bulgaricus et de la souche I-1630 de S.thermophilus.

Revivifier la souche par trois repiquages successifs sur lait plus extrait de levure (poudre de lait écrémé de 90 à 140g plus extrait de levure en poudre de 0.5 à 3g QSP 1kg avec de l'eau distillée, stérilisation 121°C 15 minute) :
- Ensemencement à 1%, incubation à 40°C (*S.thermophilus =* ST) ; 44°C (*L. bulgaricus =* LB)
- Arrêt des repiquages par refroidissement (4°C) après la prise (gélification du lait)
- Ensemencer à l'aide du dernier repiquage (1%), 200ml de M17 à 40°C (ST), 200ml de MRS à 44°C (LB)
- Faire un suivi de densité optique sur un spectrophotomètre à 660 nanomètres.
- Arrêt de la croissance bactérienne de l'inoculum par le froid (4°C) Après obtention de la fin de phase exponentielle de croissance (environ 4h à 4h30 dans de bonnes conditions)

### 2-Préparation du fermenteur (Exemple : Type BIOSTAT ED)

Choix de la normalité de la base de régulation
- ST solution de NaOH 6N
- LB solution de NaOH 2N

Stérilisation en autoclave 121°C 15 minutes
- Système d'admission de base et d'inoculation.
- Solution de base.
- Rotor et bol de la centrifugeuse.
- Connexions du fermenteur vers la centrifugeuse
- Connexions pour récupérer le surnageant stérile vers un flacon
- Connexion de la bouteille de concentré stérile vers l'azote (tuyaux+aiguille)

### Etalonnage de la sonde pH

Stérilisation du fermenteur
- Le remplir d'eau ultra pure
- Programmer un cycle de stérilisation in situ (121 °C 20')

### 3-Préparation du milieu de culture

- Utilisation d'eau distillée
- Peser les différents composés du milieu (voir recettes ci-dessous)
- Hydratation 30' sous agitation
- Stérilisation en autoclave (121°C 15 minutes)
- Refroidissement à 4°C : 40°C (ST), 44°C (LB)
- Transfert du milieu de culture dans le fermenteur de façon aseptique.

| Milieu de propagation ST | Milieu de propagation LB |
|---|---|
| - Eau distillée | - Eau distillée |
| - Perméat d'ultrafiltration 50g/l | - Perméat d'ultrafiltration 50g/l |
| - Extrait de levure 10g/l | - Extrait de levure 15g/l |
| - Sulfate de manganèse 0,1 g/l | - Sulfate de manganèse 0,1 g/l |
| - Poudre de lait écrémé 10g/l | - Tween 80 |
| pH de départ 6,5 | pH de départ 6,5 |

### 4-Lancement de la propagation

- Ensemencement du fermenteur avec l'inoculum à raison de 100ml pour 6 litres
- Lancement du programme fermenteur permettant de réguler la température, réguler le pH via les solutions de soude, agiter le milieu de culture, enregistrer le pH, la température et le volume de soude délivré.

### 5-Arrêt de la propagation

Les données sur le volume de soude délivré durant la fermentation pour réguler le pH, sont traitées pour obtenir une courbe du cumule du volume de soude consommé en fonction du temps, puis pour obtenir une courbe de vitesse de consommation de soude en fonction du temps. Le point maximum de cette dernière courbe correspondant au moment ou l'on doit arrêter la propagation par refroidissement du fermentat.

### 6-Centrifugation à froid (Exemple : Rotor a flux continu 8575).

- Prélèvement du fermentat par pompe péristaltique, et alimentation du bol de la centrifugeuse.
- Vitesse : 13 000 rpm (ST), 10 000 rpm (LB)
- Récupération d'une partie du surnageant dans un flacon stérile
- Après centrifugation, diluer le culot obtenu avec du surnageant, jusqu'à ce qu'il soit pipetable, le transférer dans une bouteille stérile préalablement refroidit (travailler sous hotte a flux laminaire, maintenir le concentré à des température inférieures à 10°C)

### 7-Congélation (travailler sous hotte à flux laminaire, manipulation aseptique, maintenir le concentré à des températures inférieures à 10°C)

- Raccordement de la bouteille de culot dilué à une pompe péristaltique à l'aide d'un tuyau souple de petite section dont l'autre extrémité est reliée à un système permettant la connexion avec plusieurs aiguilles de seringue
- Disposer un bac isotherme rempli d'azote liquide sous les aiguilles.
- Démarrer la pompe péristaltique et régler le débit pour obtenir un gouttage régulier du concentré dans l'azote liquide
- Récupérer et conditionner les granulés stérilement puis les conserver à -80°C

### 8-Contrôle des granulés concentrés congelés

Après avoir fait fondre rapidement des granulés, effectuer un dénombrement (ST ou LB : Méthode FIL117A:1988)
Les granulés de *S. thermophilus* présentent une population supérieure à 10¹⁰ cfu/g
Les granulés de *L. bulgaricus* présentent une population supérieure à 5.10⁹ cfu/g

### Exemple 3 : les granules de levure lysée stimulent la cinétique d'acidification de bactéries de l'espèce Lactobacillus bulgaricus.

A partir de la souche de *Lactobacillus bulgaricus* qui est disponible sous le numéro I-1519 auprès de la C.N.C.M. (Collection Nationale de Cultures de Microorganismes - Institut Pasteur - 28, rue du Docteur Roux - 75724 Paris Cedex 15 - France), on prépare des granules de ferment en suivant la méthode décrite en exemple 2.

On prépare également une composition conforme à l'invention, constituée du mélange de granules de ferment I-1519, avec des granules de levure lysée qui ont été préparés comme indiqué dans l'exemple 1 ci-dessus. Les granules de ferment I-1519 sont apportés dans une quantité correspondant à 0,1 g de granules de ferment par litre de mélange laitier à fermenter, et les granules de levure dans une quantité correspondant à 0,05 g de granules de levure par litre de mélange laitier à fermenter. Les deux types de granules sont mélangés ensemble mécaniquement, de manière à obtenir une distribution globalement homogène des deux types de granules dans la composition.

On prépare, à titre de substrat laitier, un mélange laitier à partir de 120 g de poudre de lait écrémé, de 70 g de saccharose, de 930 mL d'eau permutée, et l'on pasteurise ce mélange en le maintenant sur bain-marie à 95°C pendant 10 min.

On ensemence le mélange laitier pasteurisé par :
a) des granules de ferment à hauteur de 0,1 g de granules par litre de mélange laitier à fermenter, ou bien par
b) la composition conforme à l'invention indiquée ci-dessus, qui est constituée d'un mélange de granules de ferment à hauteur de 0,1 g/L, et de granules de levure lysée à hauteur de 0,05 g/L (soit 1 gramme de levure lysée pure pour 4.10¹⁰ bactéries lactiques).

On conduit la fermentation lactique du substrat laitier ensemencé à une température de 38°C pendant 18h, et on mesure le pH du substrat au cours de la fermentation. Les mesures de pH ont été réalisées à l'aide d'un appareil d'analyse de la marque CINAC (fabriqué et distribué par la société YSEBAERT - 10, avenue Charles de Gaulle - 95740 Frépillon - France), en mesurant le pH toutes les min pendant 18h.

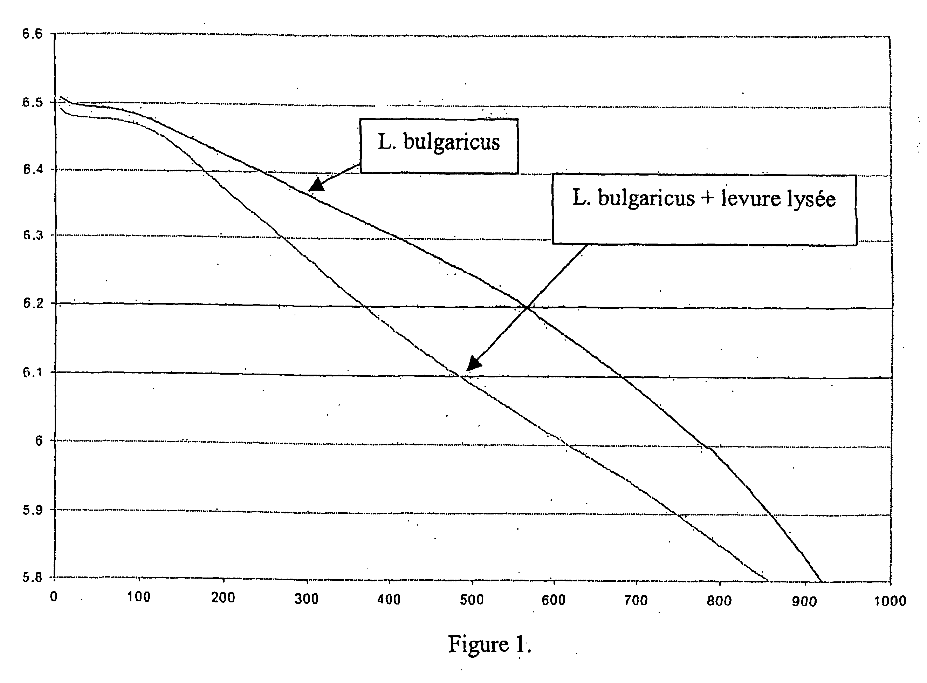

Les résultats relatifs à la cinétique d'acidification sont illustrés par la Figure 1 (axe des ordonnées : valeurs de pH ; axe des abscisses : temps en min à partir du démarrage de l'acidification). La courbe du haut correspond à l'ensemencement a) (granules de ferment *L. bulgaricus,* sans granules de levure lysée), la courbe du bas correspond à l'ensemencement b) (composition conforme à l'invention constituée de granules de ferment *L. bulgaricus* et de granules de levure lysée).

On observe qu'en présence de granules de levure lysée la cinétique d'acidification de la souche de *L. bulgaricus* est nettement stimulée.

### Exemple 4 : les granules de levure stimulent la cinétique d'acidification de la symbiose fermentaire Lactobacillus bulgaricus - Streptococcus thermophilus, sans pour autant altérer le plateau de fin d'acidification et la valeur du pH à 1000 min

A partir de la souche de *Lactobacillus bulgaricus* qui est disponible sous le numéro I-1519 auprès de la C.N.C.M. (Collection Nationale de Cultures de Microorganismes - Institut Pasteur - 28, rue du Docteur Roux - 75724 Paris Cedex 15 - France), on prépare des granules de ferment I-1519 comme indiqué à l'exemple 3 ci-dessus.

A partir de la souche de *Streptococcus thermophilus* qui est disponible sous le numéro I-1630 auprès de la C.N.C.M. (Collection Nationale de Cultures de Microorganismes - Institut Pasteur - 28, rue du Docteur Roux - 75724 Paris Cedex 15 - France), on prépare des granules de ferment I-1630 comme indiqué à l'exemple 3 ci-dessus pour la souche de *Lactobacillus bulgaricus.*

On prépare une composition constituée de 95% en poids de granules de ferment I-1519 et de 5% en poids de granules de ferment I-1630 par mélange mécanique homogène.

On prépare également une composition conforme à l'invention constituée de 76% en poids de granules de ferment I-1519, de 4% en poids de granules de ferment I-1630, et de 20% en poids de granules de levure lysée qui ont été préparés comme indiqué à l'exemple 1 ci-dessus (soit 1 gramme de levure lysée pure pour 8.10¹⁰ bactéries lactiques).

On prépare, à titre de substrat laitier, un mélange laitier constitué de 120g de poudre de lait écrémé, 70g de saccharose, et de 930 mL d'eau permutée, et l'on pasteurise ce mélange en le maintenant sur bain-marie à 95°C pendant 10 min.

On ensemence le mélange laitier pasteurisé par :
a) la composition constituée de granules de ferments I-1519 et I-1630 dans les proportions 95%-5%, à hauteur de 0,19g de granules de ferment 1-1519 et de 0,01 g de granules de ferment I-1630 par litre de mélange laitier à fermenter.
b) la composition conforme à l'invention constituée de granules de ferments I-1519et 1-1630 et de granules de levure lysée dans les proportions 76%-4%-20%, à hauteur de 0,19 g de granules de ferment I-1519, 0,01 g de granules de ferment I-1630 et de 0,05 g de granules de levure lysée par litre de mélange laitier à fermenter.

On conduit la fermentation lactique du substrat laitier ensemencé à une température de 38°C pendant 18h, et on mesure le pH du substrat au cours de la fermentation. Les mesures de pH ont été réalisées à l'aide d'un appareil d'analyse de la marque CINAC (fabriqué et distribué par la société YSEBAERT - 10, avenue Charles de Gaulle - 95740 Frépillon - France), en mesurant le pH toutes les 4 min pendant 18h.

Les résultats relatifs à la cinétique d'acidification sont illustrés par la Figure 2 (axe des ordonnées : valeurs de pH ; axe des abscisses : temps en min à partir du démarrage de l'acidification jusqu'au temps 1000 min). La courbe du haut correspond à l'ensemencement a) (granules de ferments, sans granules de levure lysée), la courbe du bas correspond à l'ensemencement b) (composition conforme à l'invention constituée de granules de ferments et de granules de levure lysée).

On observe que l'ajout de granules de levure conduit à une nette stimulation de l'activité acidifiante de la symbiose fermentaire (I-1519+I-1630), tout en conservant les caractéristiques intrinsèques du ferment (plateau d'acidification à partir de pH 4.6, pH à 1000 min identique).

### Exemple 5 : ajout de levure lysée avant pasteurisation

Des extraits de levures secs (autolysat pur, sans sel, code 107 de BIOSPRINGER) contenant 100% de levure lysée pure sont ajoutés directement avec les autres ingrédients constituant la formule du produit fini (saùf les bactéries lactiques), à raison de 0,3 g d'extrait de levure sec par litre. L'ensemble est pasteurisé. Puis on ajoute des granulés de la souche de *Streptococcus thermophilus* CNCM I-2774, à raison de 0,2 gramme de granulés par litre de produit fini. Ces granulés ont été préparés de la même manière que les granulés de la souche CNCM 1-1630 dans l'exemple 3. Ils contiennent 3,1x10¹⁰ bactéries par gramme de granulé. 0,3g de levure lysée pure sont donc apportés à 6,2x10⁹ bactéries lactiques, soit 1g de levure lysée pure pour 2,07 x 10¹⁰ bactéries lactiques.

Par comparaison avec la formule sans levures lysées, on constate une acidification plus rapide pendant les trois premières heures, puis une acidification moins rapide qu'avec la formule sans levures lysées ainsi qu'il est illustré par la figure 3.

## Revendications

1. Inoculum qui est spécialement adapté à l'ensemencement direct dans un substrat laitier pour la transformation de ce substrat laitier en aliment laitier fermenté, **caractérisé en ce que** cet inoculum comprend en mélange, ou sous forme de collection (« kit-of-parts ») :
- au moins un microorganisme sous une forme telle qu'il est capable d'exercer une activité de ferment sur un substrat laitier, et
- au moins une levure sous forme lysée,
ledit microorganisme à capacité de ferment contenu dans ledit inoculum, ou s'il y en a plusieurs, l'ensemble des microorganismes à capacité de ferment(s) contenus dans ledit inoculum étant constitué de bactéries lactiques aptes à produire un aliment laitier fermenté par fermentation lactique acidifiante d'un substrat laitier, et
ladite levure lysée étant présente dans ledit inoculum en une quantité allant de 1 gramme de levure lysée pure pour 2.10¹³ bactéries lactiques, à 1 gramme de levure lysée pure pour 2.10⁸ bactéries lactiques.

2. Inoculum selon la revendication 1, **caractérisé en ce que** ladite levure lysée est présente dans ledit inoculum en une quantité allant de 1 gramme de levure lysée pure pour 1.10¹² bactéries lactiques, à 1 gramme de levure lysée pure pour 3.10⁸ bactéries lactiques.

3. Inoculum selon la revendication 1 ou 2, **caractérisé en ce que** ladite levure lysée est présente dans ledit inoculum, et en une quantité allant de 1 gramme de levure lysée pure pour 4.10¹¹ bactéries lactiques, à 1 gramme de levure lysée pure pour 2.10⁸ bactéries lactiques.

4. Inoculum selon la revendication 3, **caractérisé en ce qu'**il comprend ladite au moins une levure lysée et ledit au moins un microorganisme à capacité de ferment sous forme de collection, sans mélange (« kit-of-parts » inoculum).

5. Inoculum selon la revendication 1 ou 2, **caractérisé en ce que** ladite levure lysée est présente dans ledit inoculum en une quantité allant de 1 gramme de levure lysée pure pour 2.10¹³ bactéries lactiques, à 1 gramme de levure lysée pure pour 1.10⁹ bactéries lactiques.

6. Inoculum selon la revendication 5, **caractérisé en ce que** ladite levure lysée est présente dans ledit inoculum en une quantité allant de 1 gramme de levure lysée pure pour 8.10¹¹ bactéries lactiques, à 1 gramme de levure lysée pure pour 3.10¹⁰ bactéries lactiques.

7. Inoculum selon la revendication 5 ou 6, **caractérisé en ce que** ladite levure lysée est présente dans ledit inoculum en une quantité allant de 1 gramme de levure lysée pure pour 2.10¹¹ bactéries lactiques, à 1 gramme de levure lysée pure pour 3.10¹⁰ bactéries lactiques.

8. Inoculum selon l'une quelconque des revendications 5 à 7, **caractérisé en ce que** ladite levure lysée est en mélange avec ledit microorganisme à capacité de ferment.

9. Inoculum selon l'une quelconque des revendications 1 à 8, **caractérisé en ce que** ladite levure lysée est présente sous forme de poudre ou de liquide.

10. Inoculum selon l'une quelconque des revendications 1 à 8, **caractérisé en ce que** ladite levure lysée est présente sous forme de granules.

11. Inoculum selon la revendication 10, **caractérisé en ce que** lesdits granules de levure lysée sont sous forme congelée.

12. Inoculum selon la revendication 10 ou 11, **caractérisé en ce que** lesdits granules de levure contiennent de 10 à 80% en poids de levure lysée, préférentiellement 25 à 65 % en poids.

13. Inoculum selon l'une quelconque des revendications 1 à 12, **caractérisé en ce que** ladite levure est de l'espèce *Saccharomyces cerevisiae.*

14. Inoculum selon l'une quelconque des revendications 1 à 13, **caractérisé en ce que** ledit au moins un microorganisme à capacité de ferment est présent sous forme de granules.

15. Inoculum selon la revendication 14, **caractérisé en ce que** lesdits granules de ferment sont sous forme congelée.

16. Inoculum selon l'une quelconque des revendications 1 à 15, **caractérisé en ce que** ledit aliment laitier est choisi dans le groupe constitué par les yoghourts, les laits fermentés, les fromages blancs et petits-suisses.

17. Inoculum selon l'une quelconque des revendications 1 à 16, **caractérisé en ce que** ledit au moins un microorganisme à capacité de ferment contenu dans cet inoculum appartient à l'espèce *Lactobacillus delbrueckii* ssp. *bulgaricus* ou à l'espèce *Streptococcus thermophilus.*

18. Inoculum selon l'une quelconque des revendications 1 à 17, **caractérisé en ce que** les deux espèces *Lactobacillus delbrueckii* ssp. *bulgaricus* et *Streptococcus thermophilus* sont représentées dans l'ensemble des microorganismes à capacité de ferments contenus dans ledit inoculum.

19. Procédé de production d'aliments laitiers fermentés, et plus particulièrement de yoghourts, laits fermentés, fromages blancs et petits-suisses, par fermentation lactique acidifiante d'un substrat laitier pasteurisé, **caractérisé en ce que**
l'on apporte au moins une levure lysée au substrat laitier, de sorte que, lors ladite fermentation lactique acidifiante, le(les) ferment(s) lactique(s) acidifiant(s) sont en présence de cette au moins une levure lysée,
ladite au moins une levure lysée étant apportée en une quantité allant de 1 gramme de levure lysée pure pour 2.10¹³ bactéries lactiques, à 1 gramme de levure lysée pure pour 2.10⁸ bactéries lactiques,
en veillant à ce que la quantité totale de levure lysée apportée au substrat laitier ne dépasse pas les 0,6 gramme de levure lysée pure par litre de substrat à fermenter, et **en ce que**
l'on maintient ce substrat laitier inoculé dans des conditions favorables à l'activité de fermentation du(des) ferment(s) lactique(s) acidifiant(s), de sorte à produire l'aliment laitier fermenté souhaité.

20. Procédé de production d'aliments laitiers fermentés selon la revendication 19, **caractérisé en ce que** la quantité totale de levure lysée apportée au substrat laitier ne dépasse pas les 0,5 gramme de levure lysée pure par litre de substrat à fermenter.

21. Procédé de production d'aliments laitiers fermentés selon la revendication 19 ou 20, **caractérisé en ce que** ladite au moins une levure lysée est apportée en une quantité allant de 1 gramme de levure lysée pure pour 1.10¹² bactéries lactiques, à 1 gramme de levure lysée pure pour 3.10⁸ bactéries lactiques.

22. Procédé de production d'aliments laitiers fermentés selon l'une quelconque des revendications 19 à 21, **caractérisé en ce que** ladite au moins une levure lysée est apportée avant pasteurisation du substrat laitier, et à une dose allant de 1 gramme de levure lysée pure pour 4.10¹¹ bactéries lactiques, à 1 gramme de levure lysée pure pour 2.10⁸ bactéries lactiques.

23. Procédé de production d'aliments laitiers fermentés selon l'une quelconque des revendications 19 à 21, **caractérisé en ce que** ladite au moins une levure lysée est apportée après pasteurisation, et à une dose allant de 1 gramme pour 2.10³ bactéries lactiques, à 1 gramme de levure lysée pour 10⁹ bactéries lactiques.

24. Procédé de production d'aliments laitiers fermentés selon la revendication 23, **caractérisé en ce que** ladite au moins une levure lysée, qui est apportée après pasteurisation, est apportée à une dose allant de 1 gramme pour 8.10¹¹ bactéries lactiques, à 1 gramme de levure lysée pour 3.10¹⁰ bactéries lactiques.

25. Procédé de production d'aliments laitiers fermentés selon la revendication 23 ou 24, **caractérisé en ce que** ladite au moins une levure lysée, qui est apportée après pasteurisation, est apportée à une dose allant de 1 gramme pour 2.10¹¹ bactéries lactiques, à 1 gramme de levure lysée pour 3.10¹⁰ bactéries lactiques.

26. Procédé de production d'aliments laitiers fermentés selon l'une quelconque des revendications 19 à 25, **caractérisé en ce que** le(les) ferment(s) lactique(s) acidifiant(s) est(sont) apporté(s) au substrat laitier directement sans pré-culture.

27. Souche I-2774 telle que déposée auprès de la CNCM (Collection Nationale de Cultures de Microorganismes, Institut Pasteur, 28 rue du Docteur Roux, F-75724 Paris Cedex 15, France)

## Claims

1. Inoculum which is specially adapted for direct inoculation into a dairy substrate for converting the latter to a fermented dairy food, **characterized in that** it comprises the following as a mixture or in the form of a kit of parts:
- at least one microorganism in a form such that it is capable of exerting a ferment activity on a dairy substrate, and
- at least one yeast in lysed form,
said microorganism with fermentation capacity contained in said inoculum, or, if there are several, the whole of the microorganisms with ferment capacity contained in said inoculum, consisting of lactic acid bacteria capable of producing a fermented dairy food by acidifying lactic acid fermentation of a dairy substrate, and
said lysed yeast being present in said inoculum in an amount ranging from 1 gram of pure lysed yeast per 2.10¹³ lactic acid bacteria, to 1 gram of pure lysed yeast per 2.10⁸ lactic acid bacteria.

2. Inoculum according to Claim 1, **characterized in that** said lysed yeast is present in said inoculum in an amount ranging from 1 gram of pure lysed yeast per 1.10¹² lactic acid bacteria, to 1 gram of pure lysed yeast per 3.10⁸ lactic acid bacteria.

3. Inoculum according to Claim 1 or 2, **characterized in that** said lysed yeast is present in said inoculum in an amount ranging from 1 gram of pure lysed yeast per 4.10¹¹ lactic acid bacteria, to 1 gram of pure lysed yeast per 2.10⁸ lactic acid bacteria.

4. Inoculum according to Claim 3, **characterized in that** it comprises said at least one lysed yeast and said at least one microorganism with ferment capacity in the form of a kit of parts, without mixing.

5. Inoculum according to Claim 1 or 2, **characterized in that** said lysed yeast is present in said inoculum in an amount ranging from 1 gram of pure lysed yeast per 2.10¹³ lactic acid bacteria, to 1 gram of pure lysed yeast per 1.10⁹ lactic acid bacteria.

6. Inoculum according to Claim 5, **characterized in that** said lysed yeast is present in said inoculum in an amount ranging from 1 gram of pure lysed yeast per 8.10¹¹ lactic acid bacteria, to 1 gram of pure lysed yeast per 3.10¹⁰ lactic acid bacteria.

7. Inoculum according to Claim 5 or 6, **characterized in that** said lysed yeast is present in said inoculum in an amount ranging from 1 gram of pure lysed yeast per 2.10¹¹ lactic acid bacteria, to 1 gram of pure lysed yeast per 3.10¹⁰ lactic acid bacteria.

8. Inoculum according to any one of Claims 5 to 7, **characterized in that** said lysed yeast is mixed with said microorganism with ferment capacity.

9. Inoculum according to any one of Claims 1 to 8, **characterized in that** said lysed yeast is present in the form of powder or of liquid.

10. Inoculum according to any one of Claims 1 to 8, **characterized in that** said lysed yeast is present in the form of granules.

11. Inoculum according to Claim 10, **characterized in that** said granules of lysed yeast are in frozen form.

12. Inoculum according to Claim 10 or 11, **characterized in that** said yeast granules contain from 10 to 80% by weight, preferably 25 to 65% by weight, of lysed yeast.

13. Inoculum according to any one of Claims 1 to 12, **characterized in that** said yeast is of the species *Saccharomyces cerevisiae.*

14. Inoculum according to any one of Claims 1 to 13, **characterized in that** said at least one microorganism with ferment capacity is present in the form of granules.

15. Inoculum according to Claim 14, **characterized in that** said ferment granules are in frozen form.

16. Inoculum according to any one of Claims 1 to 15, **characterized in that** said dairy food is selected from the group comprising yoghurts, fermented milks, curds and "petits-suisses" (cream unripened cheeses).

17. Inoculum according to any one of Claims 1 to 16, **characterized in that** said at least one microorganism with ferment capacity contained in this inoculum belongs to the species *Lactobacillus delbrueckii* ssp. *bulgaricus* or the species *Streptococcus thermophilus.*

18. Inoculum according to any one of Claims 1 to 17, **characterized in that** the two species *Lactobacillus delbrueckii* ssp. *bulgaricus* and *Streptococcus thermophilus* are represented in the whole of the microorganisms with ferment capacity contained in said inoculum.

19. Process for the production of fermented dairy foods, and more particularly yoghurts, fermented milks, curds and "petits-suisses" (cream unripened cheeses), by acidifying lactic acid fermentation of a pasteurized dairy substrate, **characterized in that**
at least one lysed yeast is introduced into the dairy substrate so that, during said acidifying lactic acid fermentation, the acidifying lactic acid ferment(s) is (are) in the presence of this at least one lysed yeast,
said at least one lysed yeast being introduced in an amount ranging from 1 gram of pure lysed yeast per 2.10¹³ lactic acid bacteria, to 1 gram of pure lysed yeast per 2.10⁸ lactic acid bacteria,
care being taken to ensure that the total amount of lysed yeast introduced into the dairy substrate does not exceed 0.6 gram of pure lysed yeast per litre of substrate to be fermented, and **in that**
this inoculated dairy substrate is maintained under conditions favourable to the fermentation activity of the acidifying lactic acid ferment(s) so as to produce the desired fermented dairy food.

20. Process for the production of fermented dairy foods according to Claim 19, **characterized in that** the total amount of lysed yeast introduced into the dairy substrate does not exceed 0.5 gram of pure lysed yeast per litre of substrate to be fermented.

21. Process for the production of fermented dairy foods according to Claim 19 or 20, **characterized in that** said at least one lysed yeast is introduced in an amount ranging from 1 gram of pure lysed yeast per 1.10¹² lactic acid bacteria, to 1 gram of pure lysed yeast per 3.10⁸ lactic acid bacteria.

22. Process for the production of fermented dairy foods according to any one of Claims 19 to 21, **characterized in that** said at least one lysed yeast is introduced before pasteurization of the dairy substrate, and in a dose ranging from 1 gram of pure lysed yeast per 4.10¹¹ lactic acid bacteria, to 1 gram of pure lysed yeast per 2.10⁸ lactic acid bacteria.

23. Process for the production of fermented dairy foods according to any one of Claims 19 to 21, **characterized in that** said at least one lysed yeast is introduced after pasteurization, and in a dose ranging from 1 gram per 2.10³ lactic acid bacteria, to 1 gram of lysed yeast per 10⁹ lactic acid bacteria.

24. Process for the production of fermented dairy foods according to Claim 23, **characterized in that** said at least one lysed yeast introduced after pasteurization is introduced in a dose ranging from 1 gram per 8.10¹¹ lactic acid bacteria, to 1 gram of lysed yeast per 3.10¹⁰ lactic acid bacteria.

25. Process for the production of fermented dairy foods according to Claim 23 or 24, **characterized in that** said at least one lysed yeast introduced after pasteurization is introduced in a dose ranging from 1 gram per 2.10¹¹ lactic acid bacteria, to 1 gram of lysed yeast per 3.10¹⁰ lactic acid bacteria.

26. Process for the production of fermented dairy foods according to any one of Claims 19 to 25, **characterized in that** the acidifying lactic acid ferment(s) is (are) introduced into the dairy substrate directly without preculture.

27. Strain 1-2774 as deposited in the CNCM (Collection Nationale de Cultures de Microorganismes, Institut Pasteur, 28 rue du Docteur Roux, F-75724 Paris Cédex 15, France).

## Patentansprüche

1. Inokulum, das speziell an die direkte Einimpfung in ein Milchsubstrat angepaßt ist, für die Transformation dieses Milchsubstrats in ein fermentiertes Milchnahrungsmittel, **dadurch gekennzeichnet, daß** dieses Inokulum als Gemisch oder in Form einer Sammlung ("kit-of-parts") enthält:
- wenigstens einen Mikroorganismus in einer solchen Form, daß er fähig ist, Fermentaktivität auf ein Milchsubstrat auszuüben, und
- wenigstens eine Hefe in lysierter Form,
wobei der Mikroorganismus mit Fermentfähigkeit, der in dem Inokulum enthalten ist, oder, wenn es mehrere sind, die Gesamtheit der Mikroorganismen mit Fermentfähigkeit, die in dem Inokulum enthalten sind, aus Milchsäurebakterien besteht, die fähig sind, ein fermentiertes Milchnahrungsmittel durch säurebildende Milchfermentation eines Milchsubstrats zu produzieren, und
wobei die lysierte Hefe in dem Inokulum in einer Menge von 1 Gramm reine lysierte Hefe pro 2·10¹³ Milchsäurebakterien bis 1 Gramm reine lysierte Hefe pro 2·10⁸ Milchsäurebakterien vorliegt.

2. Inokulum nach Anspruch 1, **dadurch gekennzeichnet, daß** die lysierte Hefe in dem Inokulum in einer Menge von
1 Gramm reine lysierte Hefe pro
1·10¹² Milchsäurebakterien bis 1 Gramm reine lysierte Hefe pro 3·10⁸ Milchsäurebakterien vorliegt.

3. Inokulum nach Anspruch 1 oder Anspruch 2, **dadurch gekennzeichnet, daß** die lysierte Hefe in dem Inokulum vorliegt und in einer Menge von 1 Gramm reine lysierte Hefe pro 4·10¹¹ Milchsäurebakterien bis 1 Gramm reine lysierte Hefe pro 2·10⁸ Milchsäurebakterien vorliegt.

4. Inokulum nach Anspruch 3, **dadurch gekennzeichnet, daß** es die wenigstens eine lysierte Hefe und den wenigstens einen Mikroorganismus mit Fermentfähigkeit in Sammlungsform ohne Gemisch ("kit-of-parts"-Inokulum) enthält.

5. Inokulum nach Anspruch 1 oder 2, **dadurch gekennzeichnet, daß** die lysierte Hefe in dem Inokulum in einer Menge von 1 Gramm reine lysierte Hefe pro 2-10¹³ Milchsäurebakterien bis 1 Gramm reine lysierte Hefe pro 1·10⁹ Milchsäurebakterien vorliegt.

6. Inokulum nach Anspruch 5, **dadurch gekennzeichnet, daß** die lysierte Hefe in dem Inokulum in einer Menge von 1 Gramm reine lysierte Hefe pro 8·10¹¹ Milchsäurebakterien bis 1 Gramm reine lysierte Hefe pro 3·10¹⁰ Milchsäurebakterien enthält.

7. Inokulum nach Anspruch 5 oder 6, **dadurch gekennzeichnet, daß** lysierte Hefe in dem Inokulum in einer Menge von 1 Gramm reine lysierte Hefe pro 2·10¹¹ Milchsäurebakterien bis 1 Gramm reine lysierte Hefe pro 3·10¹⁰ Milchsäurebakterien vorliegt.

8. Inokulum nach einem der Ansprüche 5 bis 7, **dadurch gekennzeichnet, daß** die lysierte Hefe im Gemisch mit dem Mikroorganismus mit Fermentfähigkeit vorliegt.

9. Inokulum nach einem der Ansprüche 1 bis 8, **dadurch gekennzeichnet, daß** die lysierte Hefe in Form von Pulver oder Flüssigkeit vorliegt.

10. Inokulum nach einem der Ansprüche 1 bis 8, **dadurch gekennzeichnet, daß** die lysierte Hefe in Form von Körnern vorliegt.

11. Inokulum nach Anspruch 10, **dadurch gekennzeichnet, daß** die Körner aus lysierter Hefe in gefrorener Form sind.

12. Inokulum nach Anspruch 10 oder 11, **dadurch gekennzeichnet, daß** die Hefekörner 10 bis 80 Gew.% lysierte Hefe, vorzugsweise 25 bis 65 Gew.%, enthalten.

13. Inokulum nach einem der Ansprüche 1 bis 12, **dadurch gekennzeichnet, daß** die Hefe zu der Art Saccharomyces cerevisiae gehört.

14. Inokulum nach einem der Ansprüche 1 bis 13, **dadurch gekennzeichnet, daß** der wenigstens eine Mikroorganismus mit Fermentfähigkeit in Form von Körnern vorliegt.

15. Inokulum nach Anspruch 14, **dadurch gekennzeichnet, daß** die Fermentkörner in gefrorener Form sind.

16. Inokulum nach einem der Ansprüche 1 bis 15, **dadurch gekennzeichnet, daß** das Milchnahrungsmittel aus der Gruppe ausgewählt ist, die aus Yoghurt, fermentierter Milch, weißem Käse und Petit-Suisses besteht.

17. Inokulum nach einem der Ansprüche 1 bis 16, **dadurch gekennzeichnet, daß** der wenigstens eine Mikroorganismus mit Fermentfähigkeit, der in diesem Inokulum enthalten ist, zur Art Lactobacillus delbrueckii ssp. bulgaricus oder zur Art Streptococcus thermophilus gehört.

18. Inokulum nach einem der Ansprüche 1 bis 17, **dadurch gekennzeichnet, daß** die zwei Arten Lactobacillus delbrueckii ssp. bulgaricus und Streptococcus thermophilus in der Gesamtheit der Mikroorganismen mit Fermentfähigkeit, die in dem Inokulum enthalten sind, vertreten sind.

19. Verfahren zur Herstellung von fermentierten Milchnahrungsmitteln und insbesondere Yoghurts, fermentierter Milch, weißem Käse und Petits-Suisses durch säurebildende Milchfermentation eines pasteurisierten Milchsubstrats, **dadurch gekennzeichnet, daß**
man wenigstens eine lysierte Hefe zum Milchsubstrat gibt, und zwar derart, daß während der säurebildenden Milchfermentation das säurebildende Milchferment (die säurebildenden Milchfermente) in Gegenwart dieser wenigstens einen lysierten Hefe ist (sind),
wobei die wenigstens eine lysierte Hefe in einer Menge von 1 g reine lysierte Hefe pro 2·10¹³ Milchsäurebakterien bis 1 Gramm reine lysierte Hefe pro 2·10⁸ Milchsäurebakterien zugegeben wird,
wobei beachtet wird, daß die Gesamtmenge an lysierter Hefe, die dem Milchsubstrat zugesetzt wird, 0,6 Gramm reine lysierte Hefe pro Liter an zu fermentierenden Substrat nicht übersteigt und daß man dieses inokulierte Milchsubstrat unter Bedingungen hält, die für die Fermentationsaktivität des säurebildenden Milchferments (der Säure-bildenden Milchfermente) vorteilhaft sind, so daß das gewünschte fermentierte Milchnahrungsmittel produziert wird.

20. Verfahren zur Herstellung von fermentierten Milchnahrungsmitteln nach Anspruch 19, **dadurch gekennzeichnet, daß** die Gesamtmenge an lysierter Hefe, die dem Milchsubstrat zugesetzt wird, 0,5 Gramm reine lysierte Hefe pro Liter zu fermentierendes Substrat nicht übersteigt.

21. Verfahren zur Herstellung von fermentierten Nahrungsmitteln nach Anspruch 19 oder 20, **dadurch gekennzeichnet, daß** die wenigstens eine lysierte Hefe in einer Menge von 1 Gramm reine lysierte Hefe pro 1·10¹² Milchsäurebakterien bis 1 g reine lysierte Hefe pro 3·10⁸ Milchsäurebakterien zugesetzt wird.

22. Verfahren zur Herstellung von fermentierten Nahrungsmitteln nach einem der Ansprüche 19 bis 21, **dadurch gekennzeichnet, daß** die wenigstens eine lysierte Hefe vor Pasteurisierung des Milchsubstrats zugesetzt wird und in einer Dosis von 1 Gramm reine lysierte Hefe pro 4·10¹¹ Milchsäurebakterien bis 1 Gramm reine lysierte Hefe pro 2·10⁸ Milchsäurebakterien zugesetzt wird.

23. Verfahren zur Herstellung von fermentierten Milchnahrungsmitteln nach einem der Ansprüche 19 bis 21, **dadurch gekennzeichnet, daß** die wenigstens eine lysierte Hefe nach Pasteurisierung und in einer Dosis von 1 Gramm pro 2·10³ Milchsäurebakterien bis 1 Gramm lysierte Hefe pro 10⁹ Milchsäurebakterien zugesetzt wird.

24. Verfahren zur Herstellung von fermentierten Milchnahrungsmitteln nach Anspruch 23, **dadurch gekennzeichnet, daß** die wenigstens eine lysierte Hefe, die nach Pasteurisierung zugesetzt wird, in einer Dosis von 1 Gramm pro 8·10¹¹ Milchsäurebakterien bis 1 Gramm lysierte Hefe pro 3·10¹⁰ Milchsäurebakterien zugesetzt wird.

25. Verfahren zur Herstellung von fermentierten Milchnahrungsmitteln nach Anspruch 23 oder 24, **dadurch gekennzeichnet, daß** die wenigstens eine lysierte Hefe, die nach Pasteurisierung zugesetzt wird, in einer Dosis von 1 Gramm pro 2·10¹¹ Milchsäurebakterien bis 1 Gramm lysierte Hefe pro 3·10¹⁰ Milchsäurebakterien zugesetzt wird.

26. Verfahren zur Herstellung von fermentierten Milchnahrungsmitteln nach einem der Ansprüche 19 bis 25, **dadurch gekennzeichnet, daß** das säurebildende Milchferment (die Säure-bildenden Milchfermente) dem Milchsubstrat direkt ohne Vorkultur zugesetzt wird (werden).

27. Stamm I-2774, wie er bei der CNCM (Collection Nationale de Cultures de Microorganismes, Institut Pasteur, 28 rue du Docteur Roux, F-75724 Paris Cedex 15, Frankreich) hinterlegt ist.
